# DEMANDE DE BREVET EUROPEEN

(11) **EP 4 718 739 A1**
(43) Date de publication de la demande: **01.04.2026**
(21) Numéro de dépôt: 25204894.7
(22) Date de dépôt: 26.09.2025
(51) Int. Cl.: H04B 7/04, H04B 7/145, H01Q 3/46, H01Q 15/14, G06N 3/08

(54) **PROCÉDÉ DE CONFIGURATION D AU MOINS UNE SURFACE RECONFIGURABLE INTELLIGENTE ET SYSTÈME DE COMMUNICATION ASSOCIÉ**

(30) Priorité: 27.09.2024 FR 2410349
(71) Demandeur: Commissariat à l'Energie Atomique et aux Energies Alternatives, 75015 Paris (FR)
(72) Inventeur: MERLUZZI, Mattia, 38054 GRENOBLE CEDEX 9 (FR); CLEMENTE, Antonio, 38054 GRENOBLE CEDEX 9 (FR)
(74) Mandataire: Lavoix

(57) **Abrégé**

La présente invention concerne un procédé (40) de configuration d'une surface reconfigurable intelligente d'un système de communication,
comprenant au moins une itération des étapes suivantes:
- réception (46) d'au moins deux entrées correspondant à :
- au moins une performance de calcul requise au niveau récepteur(s) ;
- un retour d'information sur les performances de calcul dudit système mesurées précédemment ;
- comparaison (48) dudit retour d'information à ladite au moins une performance de calcul requise ;
- en cas de non atteinte, par les performances mesurées, de ladite au moins une performance de calcul requise, reconfiguration (52) de ladite surface reconfigurable intelligente en tenant compte desdites au moins deux entrées ;
- utilisation (42) de ladite surface reconfigurable intelligente reconfigurée, et
- mesure (44) des performances de calcul dudit système.

## Description

La présente invention concerne un procédé de configuration d'au moins une surface reconfigurable intelligente appartenant à un système de communication d'un réseau de communication sans fil, ledit système de communication comprenant en outre : au moins un émetteur ; au moins deux récepteurs ; au moins deux unités de calcul colocalisées au niveau de chacun desdits au moins deux récepteurs, ladite au moins une surface reconfigurable intelligente étant colocalisée au niveau d'un desdits au moins deux récepteurs et comprenant une pluralité d'éléments, chacun contrôlable en phase et/ou en amplitude, ladite au moins une surface reconfigurable intelligente étant propre à recevoir et réfléchir simultanément des signaux entre ledit au moins un émetteur et lesdits au moins deux récepteurs, ledit procédé étant mis en œuvre, après une première utilisation de ladite au moins une surface reconfigurable intelligente selon sa configuration initiale pour communiquer en réflexion et réception simultanées au sein dudit système de communication.

La présente invention concerne également ledit système de communication d'un réseau de communication sans fil.

La présente invention s'inscrit donc dans le domaine des réseaux de communication cellulaire sans fil, dont la tendance actuelle est d'accueillir plusieurs services avec des exigences hétérogènes, sur la même infrastructure de réseau.

Dans ce contexte, le concept classique d'utilisateur final évolue et inclut de nombreux secteurs différents (ou verticales), tels que l'industrie 4.0, l'automobile avec les véhicules autonomes, les robots collaboratifs, etc.

Par conséquent, au-delà de la 5G, les réseaux de communication cellulaire sans fil à venir vont devoir être extrêmement flexibles au niveau de toutes les couches de la pile de protocoles de services.

Par ailleurs, dans les réseaux de communication sans fil, la diversité a toujours joué un rôle dans l'amélioration de la fiabilité, la diversité pouvant être obtenue traditionnellement grâce à des systèmes multi-antennes/porteuses/transmissions, mais s'accompagnant alors généralement d'une complexité accrue et/ou d'une surcharge (de l'anglais *overhead*)*.*

De plus, dans les réseaux de calcul connecté (de l'anglais *connect-compute networks*)*,* c'est-à-dire les réseaux dans lesquels différents noeuds communiquent et traitent les données échangées à des fins différentes, la diversité n'affecte pas seulement la communication, mais aussi le calcul.

En effet, les calculs à la fois redondants et multitâches requièrent généralement que des données soient transmises simultanément à différents noeuds informatiques de calcul.

Pour y parvenir, une solution récente consiste à transmettre des données vers au moins une surface intelligente reconfigurable RIS (de anglais *Reconfigurable Intelligent Surface*), notamment propre à générer simultanément des faisceaux multiples (de l'anglais *multiple beam*) sur une même bande de fréquence.

Une surface intelligente reconfigurable RIS est une surface artificielle composée d'une pluralité (i.e. de l'ordre de la centaine) d'éléments réfléchissants passifs et/ou actifs propres à être programmés et contrôlés pour réaliser des transformations dynamiques de l'environnement de propagation sans fil, tant à l'intérieur qu'à l'extérieur.

Les communications basées sur l'utilisation d'au moins une RIS permettent la mise en œuvre du « sans fil en tant que service » Waas (de l'anglais wireless-as-a-service), étape supplémentaire vers une reconfiguration entièrement flexible et dynamique du réseau qui implique l'environnement de propagation sans fil dans lequel les signaux sont transmis et reçus.

En effet, au moyen d'une seule transmission vers une telle surface intelligente reconfigurable RIS, un dispositif en bout de chaine de transmission (de l'anglais *end device*) est théoriquement capable de déclencher un service multitâche ou un calcul redondant et ce sans aucune surcharge dans les informations transmises.

De tels systèmes de communication sans fil assistés par RIS ont été largement étudiés ces dernières années, avec des contributions spécifiques sur la modélisation du canal et de la propagation, l'optimisation de RIS à différentes fins, la consommation d'énergie et les limites de performance.

En fonction de la configuration de la phase des éléments, des performances différentes (par exemple, des gains d'antenne) dans différentes directions sont obtenues. Par exemple, dans le cas où la RIS fonctionne exclusivement comme un récepteur, un gain plus élevé dans la seule direction prévue est propre à être obtenu, par rapport au cas où la RIS doit simultanément réfléchir/recevoir le signal dans plusieurs directions.

Les recherches n'ont cependant, jusqu'ici, pas exploré pleinement l'utilisation et l'optimisation/configuration d'une architecture de systèmes de communication sans fil assistés par RIS et à faisceaux multiples qui réfléchit et reçoit simultanément pour atteindre des destinations multiples à des fins hétérogènes avec des exigences de performance diverses.

Le but de l'invention est alors de proposer une solution pour optimiser la réception et la réflexion simultanée d'une surface intelligente reconfigurable RIS pour répondre à des exigences spécifiques en matière de performance à des destinations cibles multiples.

A cet effet, l'invention a pour objet un procédé de configuration d'au moins une surface reconfigurable intelligente appartenant à un système de communication d'un réseau de communication sans fil, ledit système de communication comprenant en outre :
- au moins un émetteur ;
- au moins deux récepteurs ;
- au moins deux unités de calcul colocalisées au niveau de chacun desdits au moins deux récepteurs ;

ladite au moins une surface reconfigurable intelligente étant colocalisée au niveau d'un desdits au moins deux récepteurs et comprenant une pluralité d'éléments, chacun contrôlable en phase et/ou en amplitude, ladite au moins une surface reconfigurable intelligente étant propre à recevoir et réfléchir simultanément des signaux entre ledit au moins un émetteur et lesdits au moins deux récepteurs,
ledit procédé étant mis en œuvre, après une première utilisation de ladite au moins une surface reconfigurable intelligente selon sa configuration initiale pour communiquer en réflexion et réception simultanées au sein dudit système de communication,
ledit procédé comprenant au moins une itération des étapes suivantes:
   - réception d'au moins deux entrées distinctes correspondant à :
      - au moins une performance de calcul requise au niveau récepteur(s) ;
      - un retour d'information sur les performances de calcul dudit système de communication mesurées lors de l'utilisation précédente de ladite surface reconfigurable intelligente ;
   - comparaison dudit retour d'information à ladite au moins une performance de calcul requise ;
   - en cas de non atteinte, par les performances de calcul mesurées, de ladite au moins une performance de calcul requise, reconfiguration de ladite au moins une surface reconfigurable intelligente en tenant compte desdites au moins deux entrées distinctes ;
   - utilisation de ladite au moins une surface reconfigurable intelligente reconfigurée, en réflexion et réception simultanées, et
   - mesure des performances de calcul dudit système de communication.

Ainsi, la présente invention vise à tirer profit de la capacité de réception et réflexion (voire multiples réflexions) simultanées d'une surface intelligente reconfigurable. En effet, selon cette propriété avantageuse, un même signal peut être reçu et réfléchi dans différentes directions pour être avantageusement utilisé à des fins distinctes simultanément, tel que :
- le calcul multitâche où la même information est utilisée par différentes unités de calcul pour fournir en sortie des résultats de différentes natures, par exemple une tâche de classification avec différentes granularités sur les étiquettes, de telles granularités étant en conséquence associées à différentes qualités de signal,
- le calcul redondant où la même information est utilisée pour mettre en œuvre des calculs d'une même tâche sur différents serveurs pour améliorer la fiabilité ;
- la communication conjointe, le calcul et la détection où le même signal est utilisé pour mettre en œuvre différents calculs au sein d'une unité de calcul donnée et pour détecter de manière sans fil l'environnement.

Autrement dit, la présente invention permet d'optimiser conjointement au moins une surface intelligente reconfigurable pour une réception et une réflexion simultanée en multifaisceaux, de même que les performances de calculs du système de communication dans lequel ladite au moins une surface intelligente reconfigurable intervient pour améliorer la qualité de service fournie.

Selon la présente invention, il est à noter que la reconfiguration itérative prend avantageusement et spécifiquement en entrées à la fois les performances requises distinctement au niveaux de chaque récepteurs et par retour (de l'anglais *feedback*) les performances réellement mesurées au niveaux de chacun de ces récepteurs (de l'anglais *online performances*) de chaque configuration, pour parvenir à reconfigurer jusqu'à trouver la meilleure configuration de la au moins une surface intelligente reconfigurable fonctionnant à la fois en réception et en réflexion qui répond, via sa réflexion et sa réception simultanées, aux besoins, hétérogènes d'un récepteur à l'autre, du système de communication.

La performance requise, comme le retour d'information, impliquent tous deux les récepteurs multiples (i.e. la performance requise par chacun des récepteurs et le retour de performance mesurée pour chacun des récepteurs), qui conjointement répondent au mieux ainsi ensemble aux besoins hétérogènes de service au sein du système de communication.

Suivant d'autres aspects avantageux de l'invention, le procédé de configuration d'au moins une surface reconfigurable intelligente comprend une ou plusieurs des caractéristiques suivantes, prises isolément ou suivant toutes les combinaisons techniquement possibles :
- ladite reconfiguration comprend la division de ladite au moins une surface reconfigurable intelligente en une pluralité de parties associées respectivement à des faisceaux distincts ;
- ladite reconfiguration comprend la sélection d'une configuration de surface reconfigurable intelligente, ou d'une configuration de chaque partie de surface reconfigurable intelligente, appartenant à une liste prédéterminée de configurations figées de la phase et/ou de l'amplitude de chaque élément de ladite au moins une surface reconfigurable intelligente ou de chaque partie de surface reconfigurable intelligente ;
- ladite sélection au sein de ladite liste prédéterminée est mise en œuvre en utilisant une approche heuristique prédéterminée ;
- ladite sélection au sein de ladite liste prédéterminée est mise en œuvre par apprentissage par renforcement ;
- ledit apprentissage par renforcement, utilisé pour sélectionner une configuration de surface reconfigurable intelligente au sein de ladite liste prédéterminée, utilise l'approche du bandit manchot ;
- ladite reconfiguration est obtenue par optimisation de la phase de chaque élément de ladite au moins une surface reconfigurable intelligente, ou de chaque élément de chaque partie de surface reconfigurable intelligente, la phase de chaque élément de ladite au moins une surface reconfigurable intelligente étant un paramètre libre optimisé par apprentissage par renforcement ;
- ladite reconfiguration est obtenue en utilisant un réseau de neurones, préalablement entrainé, dont une partie est une représentation figée des canaux de communications mis en œuvre au sein dudit système de communication et l'autre partie représente ladite au moins une surface reconfigurable intelligente, dont la phase des éléments est optimisée en tant que poids dudit réseau de neurones ;
- le procédé comprend en outre la détermination d'une métrique de performance de calcul globale du système de communication et l'optimisation de ladite reconfiguration par maximisation de ladite métrique.

L'invention concerne également un système de communication d'un réseau de communication sans fil, ledit système de communication comprenant :
- au moins un émetteur ;
- au moins deux récepteurs ;
- au moins deux unités de calcul colocalisées au niveau de chacun desdits au moins deux récepteurs ;
- au moins une surface reconfigurable intelligente colocalisée au niveau d'un desdits au moins deux récepteurs et comprenant une pluralité d'éléments, chacun contrôlable en phase et/ou en amplitude, ladite au moins une surface reconfigurable intelligente étant propre à recevoir et réfléchir simultanément des signaux entre ledit au moins un émetteur et lesdits au moins deux récepteurs,
- au moins un dispositif de configuration de ladite au moins une surface reconfigurable intelligente, ledit dispositif électronique de configuration comprenant :
   - un module de réception configuré pour recevoir au moins deux entrées distinctes correspondant à :
      - au moins une performance de calcul requise au niveau récepteur(s) ;
      - un retour d'information sur les performances de calcul dudit système de communication mesurées lors de l'utilisation précédente de ladite surface reconfigurable intelligente ;
   - un module de comparaison configuré pour comparer ledit retour d'information à ladite au moins une performance de calcul requise ;
   - un module de configuration configuré pour, en cas de non atteinte, par les performances de calcul mesurées, de ladite au moins une performance de calcul requise, reconfigurer ladite au moins une surface reconfigurable intelligente en tenant compte desdites au moins deux entrées distinctes ;
   - un module de commande configuré pour commander l'utilisation de ladite au moins une surface reconfigurable intelligente reconfigurée, en réflexion et réception simultanées, et
- un dispositif de mesure des performances de calcul dudit système de communication.

Suivant d'autres aspects avantageux de l'invention, le système de communication d'un réseau de communication sans fil comprend une ou plusieurs des caractéristiques suivantes, prises isolément ou suivant toutes les combinaisons techniquement possibles :
- le système comprend une pluralité de surfaces reconfigurables intelligentes et configuré pour configurer ladite pluralité de surfaces reconfigurables intelligentes de manière centralisée, dans lequel ledit au moins un dispositif électronique de configuration est unique et propre à configurer, de manière centralisée, la pluralité de surfaces reconfigurables intelligentes à la fois ;
- le système comprend une pluralité de surfaces reconfigurables intelligentes et, de manière distribuée, autant de dispositifs électroniques de configuration du système de communication tel que précédemment décrit, que de surfaces reconfigurables intelligentes, chaque dispositif électronique de configuration étant propre à configurer localement la seule surface reconfigurable intelligente à laquelle il est associée, le dispositif de mesure étant configuré pour mesurer globalement les performances de calcul dudit système de communication.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un système de communication selon la présente invention;
[Fig. 2] la figure 2 est un organigramme général du procédé de configuration d'une surface reconfigurable intelligente selon un mode de réalisation de la présente invention.

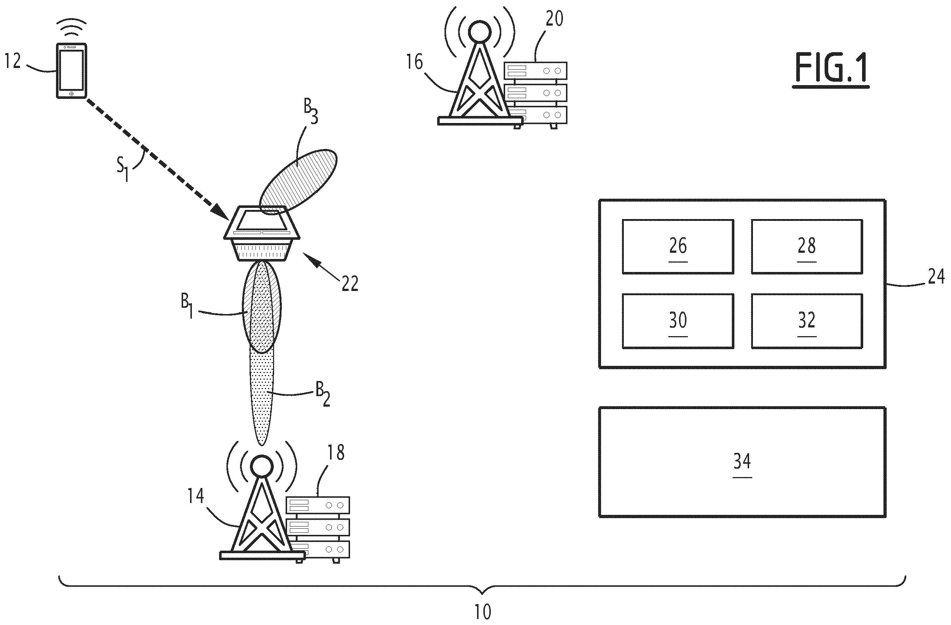

La figure 1 illustre tout d'abord schématiquement un exemple non limitatif d'un système 10 de communication selon la présente invention.

Selon la présente invention, un tel système 10 de communication comprend tout d'abord au moins un émetteur 12, tel qu'un terminal mobile (de l'anglais *user equipment*)*.*

Le système 10 de communication comprend également au moins deux récepteurs 14 et 16, qui selon l'exemple de la figure 1 sont d'une part une station de base 14 avec au moins une unité de calcul 18 colocalisée au niveau de ladite station de base 14, et une autre station de base 16 avec également au moins une unité de calcul 20 colocalisée au niveau de ladite autre station de base 16.

Autrement dit, lesdits au moins deux récepteurs 14 et 16 sont des récepteurs avec des ressources de calcul embarquées, 18 et 20 respectivement.

Le système 10 de communication comprend en outre au moins une surface reconfigurable intelligente 22, qui, de manière non représentée, est colocalisée au niveau d'un desdits au moins deux récepteurs 14 ou 16 et comprend une pluralité d'éléments, chacun contrôlable en phase et/ou en amplitude, ladite au moins une surface reconfigurable intelligente étant propre à recevoir (notamment le signal matérialisée par la flèche S₁) et réfléchir simultanément, selon les faisceaux B₁ et B₃ des signaux entre ledit au moins un émetteur 12 et lesdits au moins deux récepteurs 14 et 16.

Le faisceau B₂ illustre sur la figure 1, à titre comparatif, un faisceau classique en cas de réception isolée alors que les faisceaux B₁ et B₃, utilisés selon la présente invention, correspondent à la mise en œuvre avantageuse d'une réception/réflexion simultanée qui permet notamment d'atteindre lesdits au moins deux récepteurs 14 et 16 notamment pour du partage de tâche de calcul sur leur deux unités de calcul 18 et 20 respectivement colocalisées afin de mettre en œuvre de manière distribuée, un calcul multitâche, un calcul redondant ou une communication conjointe.

Autrement dit, le faisceau classique B₂ en cas de réception isolée est certes plus directif que le faisceau B₁ (qui apparait moins directif et donc dégradé) selon la présente invention, mais qui présente l'avantage d'être simultanément combiné au faisceau B₃ afin d'adresser simultanément les besoins de récepteur multiples.

Selon la présente invention, le système de communication 10 comprend en outre avantageusement au moins un dispositif 24 de configuration de ladite au moins une surface reconfigurable intelligente 22.

Plus précisément, ledit au moins un dispositif 24 de configuration de ladite au moins une surface reconfigurable intelligente 22 comprend tout d'abord un module 26 de réception (i.e. d'obtention) configuré pour recevoir au moins deux entrées distinctes correspondant à (i.e. égale à) au moins une performance de calcul requise au niveau récepteur(s) d'une part et d'autre part un retour d'information sur les performances de calcul dudit système de communication mesurées lors de l'utilisation précédente de ladite surface reconfigurable intelligente.

De plus, ledit au moins un dispositif 24 de configuration comprend également un module 28 de comparaison, connecté à la sortie du module de réception 26, et configuré pour comparer ledit retour d'information à ladite au moins une performance de calcul requise.

Ledit au moins un dispositif 24 de configuration comprend également un module 30 de configuration, connecté à la sortie du module 28 de comparaison, et configuré pour, en cas de non atteinte, par les performances de calcul mesurées, de ladite au moins une performance de calcul requise, reconfigurer ladite au moins une surface reconfigurable intelligente en tenant compte desdites au moins deux entrées distinctes.

Ledit au moins un dispositif 24 de configuration comprend également un module 32 de commande, connecté à la sortie du module 30 de configuration, et configuré pour commander l'utilisation de ladite au moins une surface reconfigurable intelligente reconfigurée, en réflexion et réception simultanées.

Selon le mode de réalisation de la figure 1, le système 10 de communication comprend également un dispositif 34 de mesure des performances de calcul dudit système de communication 10, ce dispositif 34 de mesure des performances de calcul étant distinct du dispositif 24 de configuration en tant que tel.

Selon une variante particulière, ledit dispositif de mesure 34 est configuré pour mettre en œuvre périodiquement la mesure, afin, le cas échéant, de déclencher une reconfiguration de ladite au moins une surface reconfigurable intelligente en cas de performance requise non atteinte.

A titre d'alternative, le dispositif 24 de configuration comprend (i.e. intègre au sein de son boitier) lui-même un module de mesure des performances de calcul dudit système de communication, la sortie dudit module de mesure étant alors connectée à l'entrée du module de réception 26 précité.

En complément facultatif, non représenté, le dispositif électronique 24 de configuration de ladite au moins une surface reconfigurable intelligente comprend un module de détermination d'une métrique de performance de calcul globale du système de communication, ledit module de détermination étant connecté par exemple à la sortie dudit module de comparaison 28 et à l'entrée du module 30 de configuration alors également configuré pour optimiser ladite configuration par maximisation de ladite métrique.

Dans l'exemple de la figure 1, le dispositif électronique 24 de configuration de ladite au moins une surface reconfigurable intelligente comprend, de manière non représentée, une unité de traitement d'informations formée par exemple d'une mémoire et d'un processeur associé à la mémoire.

Dans l'exemple de la figure 1, le module de réception (i.e. d'obtention c'est-à-dire de collecte des entrées), le module de comparaison, le module de configuration et le module de commande, ainsi qu'en complément facultatif le module de détermination d'une métrique de performance de calcul, sont réalisés chacun sous forme d'un logiciel, ou d'une brique logicielle, exécutable par le processeur. La mémoire du dispositif électronique de configuration de ladite au moins une surface reconfigurable intelligente est alors apte à stocker un logiciel de réception (i.e. d'obtention), un logiciel de comparaison, un logiciel de configuration et un logiciel de commande, ainsi qu'en complément facultatif un logiciel de détermination d'une métrique de performance de calcul. Le processeur est alors apte à exécuter chacun des logiciels parmi le logiciel de réception (i.e. d'obtention), le logiciel de comparaison, et le logiciel de configuration, ainsi qu'en complément facultatif le logiciel de détermination d'une métrique de performance de calcul.

En variante non représentée, le module de réception (i.e. d'obtention), le module de comparaison, le module de configuration, et le module de commande, ainsi qu'en complément facultatif le module de détermination d'une métrique de performance de calcul, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*)*.*

Lorsque le dispositif électronique 24 de configuration de ladite au moins une surface reconfigurable intelligente est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

En variante non représentée, le système de communication 10 comprend une pluralité de surfaces reconfigurables intelligentes et est configuré pour configurer ladite pluralité de surfaces reconfigurables intelligentes de manière centralisée, ledit au moins un dispositif électronique de configuration 24 étant, selon cette variante, unique et propre à configurer, de manière centralisée, la pluralité de surfaces reconfigurables intelligentes à la fois.

A titre d'alternative, non représentée, le système de communication 10 comprend une pluralité de surfaces reconfigurables intelligentes et, de manière distribuée, autant de dispositifs électroniques de configuration 24 que de surfaces reconfigurables intelligentes, chaque dispositif électronique de configuration 24 étant propre à configurer localement la seule surface reconfigurable intelligente à laquelle il est associée, le dispositif de mesure 34 étant au contraire configuré pour mesurer globalement les performances de calcul dudit système de communication.

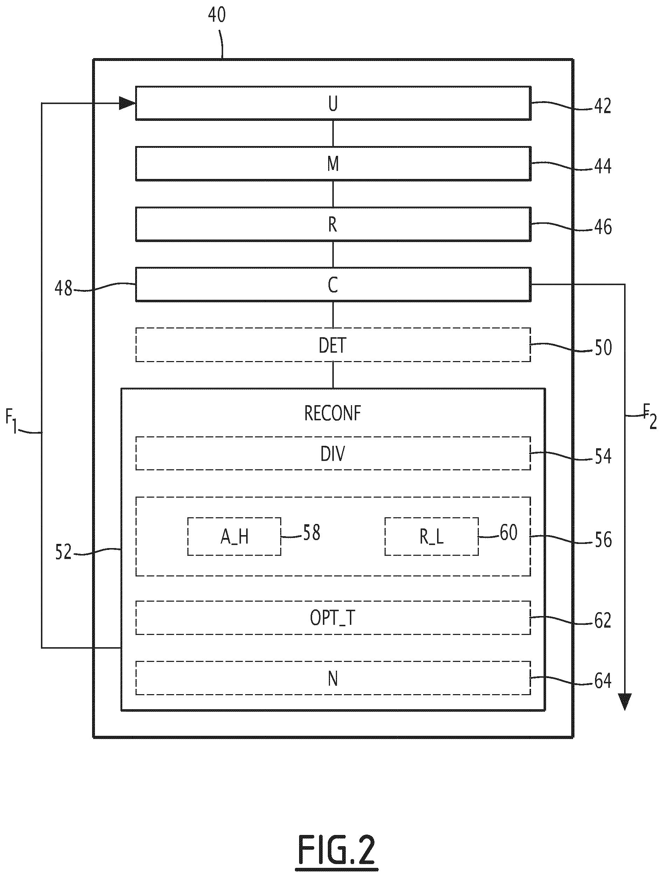

On décrit par la suite en relation avec la figure 2, un exemple de mode de réalisation général du fonctionnement du système de communication 10 de la figure 1, et en particulier du dispositif de configuration 24 de ladite au moins une surface reconfigurable intelligente 22 pour communiquer en réflexion et réception simultanées au sein dudit système de communication 10.

Plus précisément, les étapes spécifiques au procédé 40 de configuration, sont en tant que telles mises en œuvre, après une première utilisation de ladite au moins une surface reconfigurable intelligente 22 selon sa configuration initiale pour communiquer en réflexion et réception simultanées au sein dudit système de communication.

Par « configuration initiale », on entend, selon la présente invention, la configuration « sortie d'usine » de ladite au moins une surface reconfigurable intelligente, c'est-à-dire celle utilisée lors de la toute première utilisation de ladite au moins une surface reconfigurable intelligente, ou la dernière configuration dans laquelle elle a été utilisée pour satisfaire d'autres besoins que les besoins courants d'atteinte d'une performance de calcul requise au niveau récepteurs, si bien que pour les besoins de performance de calculs courants il s'agit bien de la première configuration testée.

En alternative, une configuration initiale aléatoire est utilisé, ou une configuration apte à maximiser la puissance reçue dans une direction (par exemple celle d'un des deux récepteurs).

Selon l'exemple de la figure 2, le procédé 40 est itératif et comprend classiquement, lors de la première itération, cette première étape 42 d'utilisation U de ladite au moins une surface reconfigurable intelligente 22.

Puis, tout aussi classiquement, selon l'exemple de la figure 2, le procédé 40 comprend également une étape 44 de mesure M des performances de calcul du système de communication 10 obtenu en utilisant cette configuration initiale.

Selon une variante particulière, ladite étape de mesure 44 est mise en œuvre périodiquement, afin, le cas échéant, de déclencher une reconfiguration en cas de performance requise non atteinte.

Spécifiquement selon la présente invention, le procédé comprend une étape 46 de réception R (i.e. d'obtention) d'au moins deux entrées distinctes correspondant à :
- au moins une performance de calcul requise au niveau récepteur(s) ;
- un retour d'information sur les performances de calcul dudit système de communication mesurées 44 suite à l'utilisation 42 précédente de ladite surface reconfigurable intelligente.

Par exemple, lorsque deux récepteurs sont mis en œuvre, l'étape de réception 46 collecte la performance de calcul requise (de l'anglais *target performance*) au niveau de chacun des deux récepteurs, par exemple une performance de calcul requise Q₁ requise au niveau de la station de base 14 de la figure 1, et en particulier au niveau de sa au moins une unité de calcul 18, et une performance de calcul requise Q₂ requise au niveau de la station de base 16, et en particulier au niveau de sa au moins une unité de calcul 20.

Chaque performance de calcul requise par récepteur d'indice k, notée Qₖ est notamment une combinaison de plusieurs mesures, notamment le délai, l'énergie, la précision, la confiance dans l'inférence, les erreurs de reconstruction de l'état, etc.

En complément facultatif non représenté, lors de ladite étape de réception 46, des informations complémentaires tels que des paramètres sans fil (de l'anglais *wireless parameters*) de contexte entre émetteur 12 UE (de l'anglais *User Equipment*)*,* les récepteurs 14 et 16 BS (de l'anglais Base Station) et ladite au moins une surface reconfigurable intelligente RIS sont collectées, tels que, entre autres, les états des canaux sans fil, les positions des utilisateurs, les ressources informatiques disponibles au niveau des stations de base et de l'utilisateur, le nombre de calculs effectués localement au niveau de l'utilisateur, etc.

Puis, le procédé 40 de configuration comprend une étape 48 de comparaison C dudit retour d'information à ladite au moins une performance de calcul requise.

Optionnellement, tel qu'illustré en pointillés, par le mode de réalisation de la figure 2, le procédé 40 comprend une étape 50 de détermination d'une métrique de performance de calcul globale du système de communication.

Autrement dit, alternativement aux performances individuelles (i.e. locales) de chaque récepteur, chaque performance de calcul requise par récepteur d'indice k, notée Qₖ est une métrique de performance commune à l'ensemble des récepteurs et associée par exemple au calcul redondant à différents nœuds avec les mêmes données, portant sur l'énergie consommée du système de communication, la latence, etc.

Une telle métrique est propre à être régulièrement vérifiée pour trouver une amélioration potentielle (tout en garantissant les contraintes de fonctionnement du système de communication), notamment en complément via des paramètres autres que la phase et l'amplitude des éléments de ladite au moins une surface reconfigurable intelligente tels que la puissance d'émission, la compression des données, attribution de la largeur de bande, etc.

Ces autres paramètres étant propres à être optionnellement configurés conjointement avec ladite au moins une surface reconfigurable intelligente, ou par le biais d'une optimisation propre avec la configuration de ladite au moins une surface reconfigurable intelligente comme paramètre d'entrée, ou encore de manière itérative avec la reconfiguration de RIS.

Une telle étape optionnelle 50 est propre à être mise en œuvre, à titre d'alternative par rapport à l'exemple de la figure 2, à un autre moment dès que l'étape 44 de mesure M a été mise en œuvre, ladite étape de détermination 50 utilisant les résultats de ladite étape 44 de mesure. Par exemple, l'étape optionnelle 50 est mise en œuvre préalablement, en parallèle ou après l'étape 46 de réception R, ou mise en œuvre préalablement, en parallèle ou après l'étape 48 de comparaison C.

Autrement dit, cette étape optionnelle 50 est mise en œuvre après la mesure 44 et avant l'étape 52 de reconfiguration RECONF décrite ci-après.

En effet, spécifiquement selon la présente invention, le procédé 40 comprend en cas de non atteinte, par les performances de calcul mesurées lors de l'étape 44, de ladite au moins une performance de calcul requise, l'étape 52 de reconfiguration de ladite au moins une surface reconfigurable intelligente en tenant compte desdites au moins deux entrées distinctes, et le cas échéant (i.e. optionnellement) de la métrique de performance de calcul globale du système de communication utilisée pour optimiser ladite reconfiguration par maximisation de ladite métrique, ou encore en tenant compte optionnellement des paramètres sans fil (de l'anglais *wireless parameters*) de contexte précités.

Ladite reconfiguration 52 vise à fournir la configuration propre à fournir simultanément au moins un faisceau par récepteur dont la forme est adaptée à la performance requise (i.e. la qualité de service) respectivement par chacun des récepteurs, cette performance requise étant propre à différer d'un récepteur à l'autre.

Par exemple, dans le cas d'un calcul multitâche de classification avec différentes granularités, propre à être mis en œuvre via des unités de calcul distinctes, notamment colocalisées respectivement au niveau de récepteurs distincts, la qualité du signal doit être en conséquence différente côté récepteurs pour effectuer leurs traitements respectifs avec la performance visée pour chacun.

Le procédé 40 selon la présente invention est itératif, les étapes 42, 44, 46, 48 étant réitérées selon la flèche F₁ dès qu'une reconfiguration 52 est mise en œuvre en cas de non atteinte, par les performances de calcul mesurées, de ladite au moins une performance de calcul requise, tel que détecté à l'issue de l'étape 48 de comparaison.

Selon la présente invention, on parle de « non atteinte » lorsqu'au moins une performance requise parmi toutes les performances requises au sein du système de communication n'est pas atteinte. C'est notamment le cas lorsque la performance de détection (de l'anglais *sensing*) requise est certes atteinte, mais que la précision de calcul reste inférieure au seuil de précision requis.

En revanche, selon la flèche F₂, en cas d'atteinte, par les performances de calcul mesurées, de ladite au moins une performance de calcul requise (i.e. globale et combinant plusieurs performances de calcul locale au niveau de chaque récepteur), le procédé de configuration s'achève, et la configuration de ladite au moins une surface reconfigurable intelligente obtenue est celle qui offre le meilleur compromis entre réception et réflexion mises en œuvre simultanément par ladite surface reconfigurable intelligente pour répondre au besoin de service au sein du système de communication dans laquelle elle est intégrée.

A titre d'alternative, l'achèvement dudit procédé 40 est également mis en œuvre lorsque le nombre de reconfigurations a atteint un seuil prédéterminé ou lorsque les performances de calcul n'atteignent pas les performances de calcul requises mais dépassent toutefois un seuil de performance prédéterminé.

On décrit par la suite, plusieurs variantes optionnelles possibles (représentées en pointillés) propres à être mise(s) en œuvre lors de l'étape 52 de reconfiguration.

En complément facultatif, la reconfiguration 52 comprend, au préalable, une sous-étape 54 de division DIV de ladite au moins une surface reconfigurable intelligente en une pluralité de parties associées respectivement à des faisceaux distincts.

La surface de chaque partie est notamment propre à être déterminée en utilisant les mesures de performance de calcul (i.e. la qualité de calcul) aux deux récepteurs.

A noter que par « qualité de calcul », on entend notamment la précision d'une tâche de classification, la qualité d'une prise de décision (en termes de confiance), la qualité de reconstruction d'une image, etc.

Par exemple, la surface reconfigurable intelligente est divisée en deux parties, notamment l'une dédiée à la réception en tant que telle et l'autre à la réflexion en tant que telle, pas forcément égales en taille (la taille dépendant de la ou des performances requises en entrée reçue(s)), de sorte à former deux faisceaux distincts lors de la réception et réflexion simultanée opérée par ladite au moins une surface reconfigurable intelligente lors de son utilisation, chacun des faisceaux étant respectivement dédié et associé à un desdits au moins deux récepteurs, par exemple le faisceau B₁ dédié(s) à la station de base 14 et un faisceau B₃ dédié à la station de base 16, tel qu'illustré précédemment par la figure 1. Le faisceau B₂ illustre sur la figure 1, à titre comparatif, un faisceau classique en cas de réception isolée plus directif que le faisceau B₁ (qui apparait moins directif et donc dégradé) selon la présente invention mais qui présente l'avantage d'être simultanément combiné au faisceau B₃ afin d'adresser simultanément les besoins de récepteur multiples.

A noter que la première itération de ladite sous-étape 54 est une division en parties égales dont la taille est adaptée au fur et à mesure des itérations de la ou des performances requises et mesurées.

Selon une première variante optionnelle, la reconfiguration 52 comprend une sous-étape 56 de sélection S d'une configuration de surface reconfigurable intelligente, ou d'une configuration de chaque partie de surface reconfigurable intelligente (lorsque la division 54 précitée a été optionnellement mis en œuvre), appartenant à une liste prédéterminée (de l'anglais *codebook*) de configurations figées de la phase et/ou de l'amplitude de chaque élément de ladite au moins une surface reconfigurable intelligente ou de chaque partie de surface reconfigurable intelligente.

En première option de cette première variante, ladite sélection 56 au sein de ladite liste prédéterminée est mise en œuvre en utilisant, selon une sous-étape 58, une approche heuristique A_H prédéterminée.

Par exemple, lorsque la surface a été optionnellement divisée selon la sous-étape 54 en au moins deux parties d'égale surface en utilisant les mesures de performance (i.e. qualité du calcul) aux deux récepteurs. Si une des deux performances requises respectivement par chacun desdites deux récepteurs n'est pas atteinte (i.e. le calcul mis en œuvre par l'unité de calcul 18 de la station de base 14 ne répond pas aux exigences de calcul requises au niveau récepteur 14), ladite approche heuristique prédéterminée requiert une augmentation de la surface dédiée à la direction du récepteur concerné (afin par exemple d'augmenter le gain dans la direction de l'unité de calcul 18 précitée), au prix d'une baisse de performance du/des autres récepteurs, jusqu'à trouver le compromis nécessaire à l'atteinte (ou au rapprochement de) de toutes les performances requises.

En deuxième option de cette première variante, ladite sélection 56 au sein de ladite liste prédéterminée est mise en œuvre, en utilisant une technique fondée sur les données (de l'anglais *data-driven technique*)*,* selon une sous-étape 60, par apprentissage par renforcement R_L (de l'anglais *reinforcement learning),* notamment dans le cas où les métriques de performances peuvent uniquement être observées après réception de données/décodage/traitement.

Lors de cet apprentissage par renforcement, un procédé de décision de Markov (MDP de l'anglais *Markov decision process*) est par exemple mis en œuvre, dans lequel :
- l'état peut être défini à partir des mesures sur les liens de communication entre le transmetteur 12 et les deux récepteurs 14 et 16, telles que des mesures de rapport signal sur bruit (SNR de l'anglais signal-to noise ratio) aux niveau des deux récepteurs,
- la liste des actions correspond à la liste prédéterminée de de configurations figées de la phase et/ou de l'amplitude de chaque élément de ladite au moins une surface reconfigurable intelligente ou de chaque partie de surface reconfigurable intelligente ;
- la récompense (de l'anglais *reward*) est définie comme une fonction des performances aux deux récepteurs, par exemple une fonction binaire indicatrice égale à un si la ou les performance(s) est(sont) atteintes, et zéro sinon.

A titre d'alternative, la liste des actions et/ou la récompense peuvent être respectivement définies en utilisant différentes règles prédéterminées basées sur des combinaisons des performances à chaque récepteur par produit (i.e. produit entre deux performances de deux récepteurs lorsque par exemple deux récepteurs sont considérés), somme (i.e. somme entre deux performances de deux récepteurs lorsque par exemple deux récepteurs sont considérés), ou encore somme pondérées (i.e. somme pondérées entre deux performances de deux récepteurs lorsque par exemple deux récepteurs sont considérés).

En variante, notamment dans le cas où lors de l'utilisation d'un procédé de décision de Markov, l'espace des états et des actions est trop large, l'apprentissage par renforcement R_L mis en œuvre 60 lors de ladite sélection 56 utilise un algorithme d'apprentissage automatique connu sous le nom de *Q-learning,* la lettre Q désignant la fonction qui mesure la qualité d'une action (telle que définie ci-dessus) dans un état (tel que défini ci-dessus) du système.

En complément facultatif de cette deuxième option, ledit apprentissage par renforcement, utilisé pour sélectionner une configuration de surface reconfigurable intelligente au sein de ladite liste prédéterminée, utilise l'approche du bandit manchot (de l'anglais *multi-armed bandit*)*,* qui est « sans modèle » (de l'anglais model-free) et dans lequel l'état n'est pas affecté par les actions.

Selon une deuxième variante, la reconfiguration 52 est obtenue, selon la sous-étape 62, par optimisation OPT_P de la phase de chaque élément de ladite au moins une surface reconfigurable intelligente, ou de chaque élément de chaque partie de surface reconfigurable intelligente, la phase de chaque élément de ladite au moins une surface reconfigurable intelligente étant un paramètre libre optimisé par apprentissage par renforcement, ou l'approche du bandit manchot (de l'anglais *multi-armed bandit*)*,* ou via une optimisation basée sur un modèle (de l'anglais *model-based optimisation*) telle que la descente de gradient projetée (de l'anglais *projected gradient descent*)*,* mise respectivement en œuvre lorsqu'il est possible de modéliser les performances des différents noeuds (en particulier les récepteurs) du système de communication.

La différence de cette deuxième variante 62 par rapport à la première variante 56 tient dans la liberté de sélectionner la phase de chaque élément, au lieu de chercher dans une liste prédéterminée de configurations figées.

Selon une troisième variante, la reconfiguration 52 est obtenue, selon la sous-étape 64, en utilisant un réseau de neurones N, préalablement entrainé, dont une partie est une représentation figée des canaux de communications mis en œuvre au sein dudit système de communication et l'autre partie représente ladite au moins une surface reconfigurable intelligente, dont la phase des éléments est optimisée en tant que poids dudit réseau de neurones.

Par définition, un réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de *« Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel »* en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de *« fully connected »,* et parfois désigné sous la dénomination « couche dense ».

Par exemple, selon cette troisième variante, un réseau de neurones, dont une couche représente les éléments de la surface reconfigurable, avec notamment deux poids par élément nécessaires pour représenter les valeurs de phases complexes, est utilisé selon la présente invention. Une autre couche représente les canaux entre le transmetteur (i.e. l'émetteur 12) et la surface reconfigurable intelligente RIS, et entre la surface reconfigurable intelligente RIS et les au moins deux récepteurs 14 et 16.

Selon cette troisième variante, il est en outre nécessaire de définir la tâche du réseau de neurones, par exemple une tâche de classification. Une fonction de perte (de l'anglais *loss function*) globale est définie comme une composition des pertes aux au moins deux récepteurs 14 et 16, par exemple, la somme des deux entropie croisées (de l'anglais *cross-entropy*)*.* Un tel réseau de neurone est entrainé pour minimiser cette fonction de perte commune et atteindre les performances aux deux récepteurs lors de la phase ultérieure (i.e. après entrainement) d'inférence.

Pour chacune de ces première, deuxième et troisième variante, une fonction de coût et/ou une ou plusieurs contraintes d'optimisation est (sont) propre(s) à être prises en compte pour atteindre différents objectifs tels que la surcharge de communication (de l'anglais *communication overhead*)*,* notamment en cas de calcul redondant, moins d'informations peuvent être transmises sans sacrifier les performances, ou encore le délai pour atteindre deux destinations (c'est-à-dire des unités de calcul) tout en atteignant la performance de calcul visée, ou une efficacité d'atteinte de l'objectif de communication (de l'anglais *goal-effectiveness*)*.*

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi d'utiliser au moins une surface reconfigurable intelligente RIS dont la configuration, en termes d'architecture, vise spécifiquement à tirer profit d'au moins une réception et d'au moins une réflexion mises en œuvre simultanément pour répondre simultanément à diverses besoins du système de communication au sein duquel ladite au moins une surface reconfigurable intelligente RIS est mise en œuvre, à savoir des besoins de communication, de calcul et de détection.

Autrement dit, la présente invention propose de ne pas considérer le fait que ladite au moins une surface reconfigurable intelligente RIS intervienne à la fois en réception et en réflexion comme un détriment, mais au contraire comme un atout, et d'utiliser cette propriété de réception/réflexion simultanée pour obtenir les performances souhaitées des différents services coexistant dans le scénario sans fil assisté par RIS au sein du système de communication à récepteurs multiples.

La présente invention est ainsi propre à être appliquée aux réseaux cellulaires sans fil de quatrième génération actuels et à leurs évolutions futures (5G, 3GPP LTE Pro, LiFi, et normes « Beyond 5G », 6G). En effet, la présente invention n'exige pas de changements majeurs dans les normes actuelles à mettre en œuvre.

La présente invention vise ainsi à répondre à une demande pour de nouvelles applications et de nouveaux services tels que les réseaux domestiques (ultra-denses) ainsi que des services mobiles fiables à haut débit dans les environnements d'entreprise, les lieux publics intérieurs (par exemple, les aéroports, les hôpitaux) et extérieurs (par exemple, dans les transports publics). Dans tous ces scénarios, les utilisateurs sont en effet propres à être connectés à des points d'accès locaux (y compris des stations de base macro) et à des relais déployés de manière ad hoc, équipés de surfaces intelligentes reconfigurables RIS, et la présente invention permet de nouveaux types de services d'applications industrielles où la performance peut être améliorée (boostée) de manière sélective et locale, avec des exigences et des applications hétérogènes coexistant sur la même architecture.

## Revendications

1. Procédé (40) de configuration d'au moins une surface reconfigurable intelligente (22) appartenant à un système de communication (10) d'un réseau de communication sans fil, ledit système de communication (10) comprenant en outre :
- au moins un émetteur (12) ;
- au moins deux récepteurs (14,16) ;
- au moins deux unités (18,20) de calcul colocalisées au niveau de chacun desdits au moins deux récepteurs ;
ladite au moins une surface reconfigurable intelligente étant colocalisée au niveau d'un desdits au moins deux récepteurs (14,16) et comprenant une pluralité d'éléments, chacun contrôlable en phase et/ou en amplitude,
ledit procédé (40) étant mis en œuvre, après une première utilisation de ladite au moins une surface reconfigurable intelligente selon sa configuration initiale,
ledit procédé (40) comprenant au moins une itération des étapes suivantes:
- réception (46) d'au moins deux entrées distinctes correspondant à :
- au moins une performance de calcul requise au niveau récepteur;
- un retour d'information sur les performances de calcul dudit système de communication mesurées lors de l'utilisation précédente de ladite surface reconfigurable intelligente ;
- comparaison (48) dudit retour d'information à ladite au moins une performance de calcul requise ;
- en cas de non atteinte, par les performances de calcul mesurées, de ladite au moins une performance de calcul requise, reconfiguration (52) de ladite au moins une surface reconfigurable intelligente en tenant compte desdites au moins deux entrées distinctes ;
- utilisation (42) de ladite au moins une surface reconfigurable intelligente reconfigurée, et
- mesure (44) des performances de calcul dudit système de communication.

2. Procédé (40) selon la revendication 1, dans lequel ladite reconfiguration (52) comprend la division (54) de ladite au moins une surface reconfigurable intelligente en une pluralité de parties associées respectivement à des faisceaux distincts.

3. Procédé (40) selon la revendication 1 ou 2, dans lequel ladite reconfiguration (52) comprend la sélection (56) d'une configuration de surface reconfigurable intelligente, ou d'une configuration de chaque partie de surface reconfigurable intelligente, appartenant à une liste prédéterminée de configurations figées de la phase et/ou de l'amplitude de chaque élément de ladite au moins une surface reconfigurable intelligente ou de chaque partie de surface reconfigurable intelligente.

4. Procédé (40) selon la revendication 3, dans lequel ladite sélection (56) au sein de ladite liste prédéterminée est mise en œuvre en utilisant (58) une approche heuristique prédéterminée.

5. Procédé (40) selon la revendication 3, dans lequel ladite sélection (56) au sein de ladite liste prédéterminée est mise en œuvre par apprentissage par renforcement (60).

6. Procédé (40) selon la revendication 5, dans lequel ledit apprentissage par renforcement (60), utilisé pour sélectionner une configuration de surface reconfigurable intelligente au sein de ladite liste prédéterminée, utilise l'approche du bandit manchot.

7. Procédé (40) selon la revendication 1 ou 2, dans lequel ladite reconfiguration (52) est obtenue par optimisation (62) de la phase de chaque élément de ladite au moins une surface reconfigurable intelligente, ou de chaque élément de chaque partie de surface reconfigurable intelligente, la phase de chaque élément de ladite au moins une surface reconfigurable intelligente étant un paramètre libre optimisé par apprentissage par renforcement.

8. Procédé (40) selon la revendication 1, dans lequel ladite reconfiguration (52) est obtenue en utilisant (64) un réseau de neurones, préalablement entrainé, dont une partie est une représentation figée des canaux de communications mis en œuvre au sein dudit système de communication et l'autre partie représente ladite au moins une surface reconfigurable intelligente, dont la phase des éléments est optimisée en tant que poids dudit réseau de neurones.

9. Procédé (40) selon l'une quelconque des revendications précédentes comprenant en outre la détermination (50) d'une métrique de performance de calcul globale du système de communication et l'optimisation de ladite reconfiguration par maximisation de ladite métrique.

10. Système de communication (10) d'un réseau de communication sans fil, ledit système de communication comprenant :
- au moins un émetteur (12) ;
- au moins deux récepteurs (14, 16) ;
- au moins deux unités de calcul (18,20) colocalisées au niveau de chacun desdits au moins deux récepteurs ;
- au moins une surface reconfigurable intelligente (22) colocalisée au niveau d'un desdits au moins deux récepteurs et comprenant une pluralité d'éléments, chacun contrôlable en phase et/ou en amplitude,
- au moins un dispositif (24) de configuration de ladite au moins une surface reconfigurable intelligente (22), ledit dispositif électronique (24) de configuration comprenant :
- un module (26) de réception configuré pour recevoir au moins deux entrées distinctes correspondant à :
- au moins une performance de calcul requise au niveau récepteur;
- un retour d'information sur les performances de calcul dudit système de communication mesurées lors de l'utilisation précédente de ladite surface reconfigurable intelligente ;
- un module (28) de comparaison configuré pour comparer ledit retour d'information à ladite au moins une performance de calcul requise ;
- un module (30) de configuration configuré pour, en cas de non atteinte, par les performances de calcul mesurées, de ladite au moins une performance de calcul requise, reconfigurer ladite au moins une surface reconfigurable intelligente en tenant compte desdites au moins deux entrées distinctes ;
- un module (32) de commande configuré pour commander l'utilisation de ladite au moins une surface reconfigurable intelligente reconfigurée, et
- un dispositif (34) de mesure des performances de calcul dudit système de communication.

11. Système de communication selon la revendication 10 comprenant une pluralité de surfaces reconfigurables intelligentes et configuré pour configurer ladite pluralité de surfaces reconfigurables intelligentes de manière centralisée, dans lequel ledit au moins un dispositif électronique de configuration est unique et propre à configurer, de manière centralisée, la pluralité de surfaces reconfigurables intelligentes à la fois.

12. Système de communication selon la revendication 10 comprenant une pluralité de surfaces reconfigurables intelligentes et, de manière distribuée, autant de dispositifs électroniques de configuration du système de communication selon la revendication 10 que de surfaces reconfigurables intelligentes, chaque dispositif électronique de configuration étant propre à configurer localement la seule surface reconfigurable intelligente à laquelle il est associée, le dispositif de mesure étant configuré pour mesurer globalement les performances de calcul dudit système de communication.
